# EUROPÄISCHE PATENTSCHRIFT

(11) **EP 4 060 161 B1**
(45) Veröffentlichungstag und Bekanntmachung des Hinweises auf die Patenterteilung: **28.06.2023**
(21) Anmeldenummer: 21163391.2
(22) Anmeldetag: 18.03.2021
(51) Int. Cl.: E21B 17/05, E21B 17/07, E21B 19/02

(54) **SEILWIRBEL**
SWIVEL
DOUILLE DE CÂBLE

(43) Veröffentlichungstag der Anmeldung: 21.09.2022
(73) Patentinhaber: BAUER Maschinen GmbH, 86529 Schrobenhausen (DE)
(72) Erfinder: BRAUN, Roland, 86447 Aindling (DE); SIEGMANN, Tobias, 86554 Pöttmes (DE)
(74) Vertreter: Wunderlich & Heim Patentanwälte Partnerschaftsgesellschaft mbB

(56) Entgegenhaltungen:
- EP-A1- 3 779 117
- EP-B1- 2 821 585
- US-A- 5 501 287

## Beschreibung

Die Erfindung betrifft einen Seilwirbel zum Verbinden eines Seils oder einer Halterung mit einer relativ zum Seil beziehungsweise der Halterung drehbaren Komponente, insbesondere einer Kellystange, mit einem stehenden ersten Wirbelteil, welches an dem Seil beziehungsweise der Halterung befestigbar ist, und einem drehbaren zweiten Wirbelteil, welches an dem stehenden ersten Wirbelteil drehbar und axial fest gelagert sowie mit der Komponente verbindbar ist, gemäß dem Oberbegriff des Anspruchs 1.

Sogenannte Seilwirbel werden insbesondere an Baumaschinen eingesetzt, wenn an einem Tragseil oder einer Tragstange eine drehend angetriebene Komponente aufzuhängen ist, wobei sich die Drehung der Komponente nicht auf das Seil oder die Tragstange übertragen soll.

Ein Seilwirbel ist beispielsweise aus der EP 2 821 585 B1 bekannt, wobei zusätzlich zu der drehbaren Aufhängung an einem Seil eine Drehmomentstütze vorgesehen ist. Diese Drehmomentstütze verbindet über den Seilwirbel hinweg das im Wesentlichen drehfest ausgebildete Tragseil mit dem Stator einer Drehdurchführung an einer drehend antreibbaren Kellystange für ein Bohrwerkzeug. Die zusätzliche Anordnung einer Drehdurchführung im Bereich des Seilwirbels erlaubt so die Übertragung einer Flüssigkeit von dem feststehenden Tragseil zu dem drehenden Bohrgestänge. Bei diesem bekannten Seilwirbel ist es erforderlich, nach Anhängen der Kellystange an den Seilwirbel die stangenförmige Drehmomentstütze händisch zu montieren. Dies ist zeitaufwändig.

Weiterhin ist eine Kellystange bekannt, bei welcher unterhalb einer Seilaufhängung eine Drehdurchführung angeordnet ist. Bei dieser Anordnung wird ein Kraftfluss um die Drehdurchführung herum erreicht, so dass diese besonders schonend und damit wartungsarm betrieben werden kann.

Der Erfindung liegt die **Aufgabe** zugrunde, einen Seilwirbel anzugeben, mit welchem neben einer drehbaren Aufhängung einer Komponente zugleich eine zusätzliche drehfeste Verbindung geschaffen werden kann.

Die Aufgabe wird durch einen Seilwirbel mit den Merkmalen des Anspruchs 1 gelöst. Bevorzugte Ausführungsformen der Erfindung sind in den abhängigen Ansprüchen angegeben.

Der erfindungsgemäße Seilwirbel ist dadurch gekennzeichnet, dass der drehbare zweite Wirbelteil hülsenförmig mit einem axialen Durchgang ausgebildet ist und dass an dem stehenden ersten Wirbelteil oder der drehbaren Komponente ein Verbindungsdorn ausgebildet ist, welcher sich zumindest teilweise axial entlang des Durchgangs des drehbaren zweiten Wirbelteils erstreckt.

Eine Grundidee der Erfindung besteht darin, einen Seilwirbel mit einem hülsenförmigen drehbaren Wirbelteil auszugestalten, welcher mit der anzuhängenden drehbaren Komponente drehfest verbunden wird. Das zweite drehbare Wirbelteil ist dabei drehbar an dem feststehenden ersten Wirbelteil gelagert, welches mit dem Seil oder der feststehenden Halterung, etwa einem Kranhaken oder einer Tragstange, verbunden ist. Die hülsenförmige Gestaltung des drehbaren zweiten Wirbelteils ermöglicht es, in dem hierdurch gebildeten Durchgang einen Verbindungsdorn anzuordnen, welcher fest mit dem feststehenden ersten Wirbelteil verbunden oder drehfest verbindbar ist. Der Verbindungsdorn kann entweder fest an dem ersten Wirbelteil oder an der anzuhängenden Komponente angeordnet sein, welche eine Drehdurchführung aufweisen kann.

Mit der Erfindung wird ermöglicht, neben der eigentlichen drehbaren Aufhängung einer Komponente an einem Seilwirbel gleichzeitig auch eine drehfeste Verbindung zu einer Teilkomponente, etwa einer Drehdurchführung, möglichst ohne Verschraubung von Leitungen, an der aufzuhängenden Komponente vorzusehen.

Eine bevorzugte Ausführungsform der Erfindung besteht darin, dass der Verbindungsdorn rohrförmig ausgebildet ist und entlang seines Rohrinnenraums eine Fluidleitung, eine Datenleitung, eine elektrische Stromleitung und/oder eine Hydraulikleitung verläuft. Auf diese Weise kann der Seilwirbel nicht nur als ein einfaches Gelenkelement zur Aufhängung verwendet werden. Vielmehr wird es durch den rohrförmigen Verbindungsdorn ermöglicht, eine Flüssigkeit, ein Gas, elektrischen Strom, Daten und/oder ein sonstiges Medium unmittelbar durch den Seilwirbel zu übertragen.

Besonders vorteilhaft ist es nach einer Weiterbildung der Erfindung, dass an dem freien Ende des Verbindungsdorns ein Verbindungsabschnitt zum Bilden einer form-und/oder kraftschlüssigen Verbindung mit einem Gegen-Verbindungsabschnitt ausgebildet ist. Der Gegen-Verbindungsabschnitt kann passend an der anzubringenden Komponente vorgesehen sein. Der Verbindungsabschnitt kann insbesondere ein Stecker sein, welcher durch einfaches axiales Zusammenstecken eine gewünschte Verbindung zu dem Gegen-Verbindungsabschnitt herstellt. Die Verbindung kann dabei eine rein mechanische und/oder eine leitungstechnische Verbindung sein.

Besonders vorteilhaft ist es nach einer Weiterbildung der Erfindung, dass der Verbindungsabschnitt mit einem Stator einer Drehdurchführung verbindbar ist. Die Drehdurchführung kann dabei an der anzubringenden Komponente vorgesehen sein. Der anzubringende Stator ist somit drehfest mit dem ersten Wirbelteil des Seilwirbels verbunden. Vorzugsweise kann dabei der Seilwirbel an einem Seil aufgehängt sein, welches im Wesentlichen drehsteif ist.

Besonders zweckmäßig ist es nach einer weiteren Ausführungsform der Erfindung, dass der Verbindungsdorn an seinem dem Durchgang abgewandten Ende einen Anschluss für eine Zuführleitung aufweist. Der Anschluss kann dabei insbesondere an einer Außenseite des ersten Wirbelteils ausgebildet sein. An dem zu der drehend antreibbaren Komponente feststehenden ersten Wirbelteil kann so eine Fluid-, elektrische Strom- oder Datenleitung entsprechend dem Tragseil oder der Tragstange angeschlossen werden. Hierdurch ist eine besonders effiziente Übertragung eines Fluides, von elektrischem Strom oder von Daten möglich.

Die Erfindung umfasst weiterhin eine Kellystangenanordnung mit einem solchen erfindungsgemäßen Seilwirbel und einer Kellystange, welche an ihrem oberen Ende mit dem Seilwirbel zum Anhängen an ein Tragseil und an ihrem unteren Ende mit einer Verbindungseinrichtung für ein Werkzeug, insbesondere ein Bohrwerkzeug, versehen ist. Die Kellystange kann dabei eine Einfachkellystange oder eine teleskopierbare Kellystange sein. An der Außenseite der drehbar aufgehängten Kellystange sind in grundsätzlich bekannter Weise axial verlaufende Antriebsleisten angeordnet, welche eine Drehmomentübertragung von einem ringförmigen Kellyantrieb auf die axial hierzu verschiebbare Kellystange ermöglichen.

Eine bevorzugte Ausführungsform der erfindungsgemäßen Kellystangenanordnung besteht darin, dass die Kellystange drehfest mit dem drehbaren zweiten Wirbelteil verbunden ist. Das zweite Wirbelteil dreht sich somit mit der Kellystange, wenn diese drehend angetrieben wird. Der axiale Kraftfluss des Seilwirbels läuft dabei von dem Tragseil über das hierzu feststehende erste Wirbelteil auf das daran drehbar gelagerte zweite Wirbelteil, welches drehfest mit einer Aufhängeeinrichtung der Kellystange verbunden ist.

Eine besonders vorteilhafte Kellystangenanordnung ergibt sich nach einer Weiterbildung der Erfindung dadurch, dass die Kellystange an ihrem oberen Ende eine Drehdurchführung aufweist, welche einen Stator und einen Rotor umfasst, welcher drehfest und axial fest mit der Kellystange verbunden ist, und dass der Stator der Drehdurchführung drehfest und lösbar mit dem Verbindungsdorn des Seilwirbels verbunden ist. Der Verbindungsdorn des Seilwirbels kann somit eine Zuführung für ein Fluid, elektrischen Strom oder von Daten von einer von außen zugeführten Zuführleitung haben, welche vorzugsweise zumindest teilweise parallel zu dem Tragseil verläuft. Der Begriff des Stators bezieht sich dabei auf das feststehende Teil der Drehdurchführung relativ zu dem Verbindungsdorn und dem ersten Wirbelteil des Seilwirbels. Der Rotor der Drehdurchführung hingegen ist im Sinne der Erfindung das Teil der Drehdurchführung, welches drehfest mit der drehend antreibbaren Kellystange verbunden ist.

Zum einfachen Bilden einer Leitungsverbindung ist es nach einer Ausführungsform der Erfindung vorteilhaft, dass an dem Stator ein Gegenverbindungsabschnitt angeordnet ist, welcher passend zu dem Verbindungsabschnitt an dem Verbindungsdorn ausgebildet ist. Dabei kann die Leitungsverbindung insbesondere durch ein einfaches axiales Zusammenstecken entsprechend einer Steckverbindung gebildet werden. Von einer zusätzlichen Lagesicherung, etwa einer Verschraubung oder Verbolzung, kann abgesehen werden.

Besonders zweckmäßig ist es dabei, dass die Leitungsverbindung als eine lösbare form- und/oder kraftschlüssige Verbindung zum Leiten eines Fluides, von Daten und/oder von elektrischem Strom ausgebildet ist. Entsprechend herkömmlichen axialen Steckverbindungen können an den Steckelementen zueinander passende Kraftschlusselemente, etwa Federn oder Spannbügel, und/oder Formschlusselemente, etwa Keilnutelemente, ausgebildet sein. Auch können zur Herstellung einer drehfesten axialen Steckverbindung die Stecker in einer unrunden Form, etwa mit einem polygonalen Querschnitt oder mit einem ovalen Querschnitt, ausgebildet sein. Zum Leiten eines Fluides sind entsprechende Kanäle vorgesehen, während zum Leiten von elektrischem Strom oder Daten entsprechende Leitungen etwa mit schleifenden Kontaktverbindungen vorgesehen sind.

Die Erfindung umfasst weiter ein Bohrgerät zum Bohren im Boden, mit einer Trägereinheit und einem Bohrantrieb zum drehenden Antreiben einer Kellystange mit einem Bohrwerkzeug, wobei eine erfindungsgemäße Kellystangenanordnung vorgesehen ist. Die Kellystangenanordnung kann dabei so ausgebildet sein, wie sie vorausgehend beschrieben wurde. Es können somit mit dem Bohrgerät die entsprechenden Vorteile erzielt werden.

Das Bohrwerkzeug ist am unteren Ende der Kellystange angeordnet. Das Bohrwerkzeug kann insbesondere eine Bohrschnecke, ein Bohreimer, ein Verdrängungsbohrer, ein Felsbohrer oder ein sonstiges bekanntes Bohrwerkzeug für den Grundbau oder den Spezialtiefbau sein.

Die Erfindung wird nachfolgend anhand eines bevorzugten Ausführungsbeispiels weiter beschrieben, welches schematisch in den Zeichnungen dargestellt ist. In den Zeichnungen zeigen:
- Fig. 1: eine Querschnittsansicht einer erfindungsgemäßen Kellystangenanordnung mit einem erfindungsgemäßen Seilwirbel vor einem Zusammenstecken;
- Fig. 2: eine Querschnittsansicht einer erfindungsgemäßen Kellystangenanordnung mit einem erfindungsgemäßen Seilwirbel in einem zusammengesteckten Zustand;
- Fig. 3: eine perspektivische Detaildarstellung eines Verbindungsdorns vor einem Verbinden;
- Fig. 4: eine perspektivische Detaildarstellung eines Gegenverbindungsabschnitts für den Verbindungsdorns zum Verbinden; und
- Fig. 5: eine Darstellung des Verbindungsdorns von Fig. 2 nach dem Verbinden mit dem Gegenverbindungsabschnitt von Fig.3.

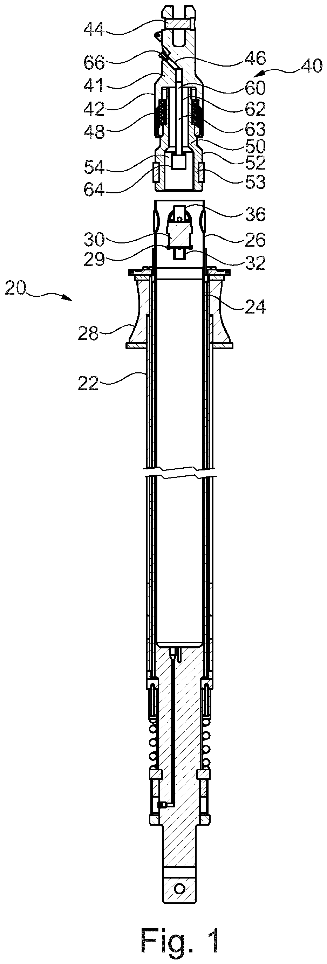

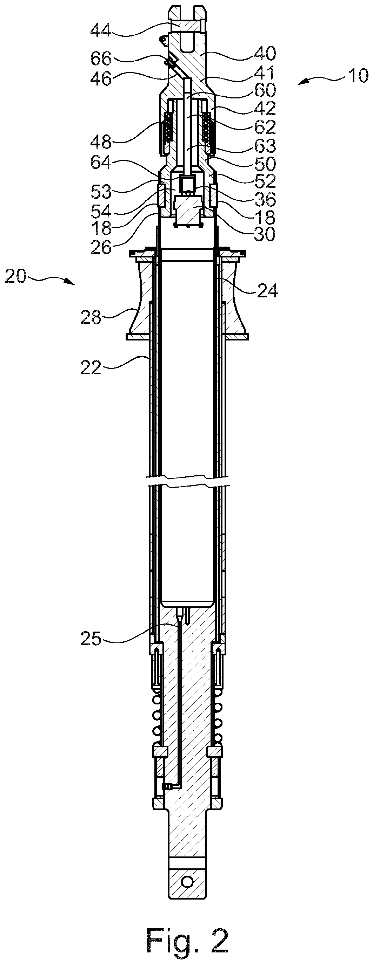

Eine erfindungsgemäße Kellystangenanordnung 10 mit einer Kellystange 20 und einem erfindungsgemäßen Seilwirbel 40 wird nachfolgend in Zusammenhang mit den Figuren 1 und 2 näher erläutert. Die Kellystange 20 ist dabei als eine teleskopierbare Kellystange 20 mit einer rohrförmigen Außenkellystange 22 und einer darin drehfest aber relativ zur Außenkellystange 22 axial verschiebbar angeordneten rohrförmigen Innenkellystange 24 ausgebildet. Am oberen Ende der Innenkellystange 24, welche aus der Außenkellystange 22 herausragt, ist ein rohrförmiger Verbindungsbereich 26 zur Verbindung mit einem Seilwirbel 40 angeordnet. Der Seilwirbel 40 ist mit einem nicht dargestellten Tragseil verbunden, über welches die Kellystange 20 gehalten wird. Innerhalb des rohrförmigen Verbindungsbereichs 26 ist an einer nicht dargestellten Tragplatte eine Drehdurchführung 30 angebracht.

Die Kellystange 20 wird etwa beim Einsatz an einem Bohrgerät über den Seilwirbel 40 in einer vertikalen Ausrichtung an einem Mast über das Tragseil gehalten, wobei die Kellystange 20 von einem ringförmigen Drehantrieb zum Ausführen eines Kellybohrverfahrens drehend angetrieben wird. Dabei kann die Kellystange 20 mittels eines Aufsatzringes 28 an der Außenkellystange 22 auf den Drehantrieb aufgesetzt werden. Durch den Seilwirbel 40 wird in grundsätzlich bekannter Weise verhindert, dass sich die Drehung der drehend angetriebenen Kellystange 20 auf das hierzu drehfeste Tragseil des Bohrgerätes überträgt.

Der erfindungsgemäße Seilwirbel 40 weist ein rohrförmiges erstes Wirbelteil 41 mit einem Hülsenkörper 42 auf. Dieses erste Wirbelteil 41 wird an seinem oberen Ende, welches von der Kellystange 20 abgewandt ist, in bekannter Weise durch einen quer gerichteten Haltebolzen 44 an einer Aufhängung des Tragseiles befestigt. Innerhalb des Hülsenkörpers 42 ist ein Drehlager 48 angeordnet, mit welchem innerhalb des ersten Wirbelteiles 41 ein rohrförmiges zweites Wirbelteil 50 drehbar, aber axial fest gelagert ist. Das zweite Wirbelteil 50 weist dabei eine rohrartige Außenhülse 52 auf, welche axial gegenüber dem ersten Wirbelteil 41 in Richtung zur anzubringenden Komponente, also im dargestellten Ausführungsbeispiel der Kellystange 20, vorsteht. Das hierdurch gebildete vorstehende Verbindungsende 53 des zweiten Wirbelteils 50 kann passend in den hülsenförmigen Verbindungsbereich 26 der Kellystange 20 eingesteckt werden, wie anschaulich in Fig. 1 dargestellt ist. In dem zusammengesteckten Zustand, welcher in Fig. 2 gezeigt ist, ist das Verbindungsende 53 des Seilwirbels 40 über quer gerichtete Verbindungselemente 18 axial fest und drehfest mit der Kellystange 20 verbunden.

Innerhalb des rohrförmigen zweiten Wirbelteiles 50 ist ein Durchgang 54 ausgebildet, in welchen ein rohrförmiger Verbindungsdorn 60 mittig hineinragt. Der Verbindungsdorn 60 weist einen Rohrkörper 62 mit einem Rohrinnenraum 63 auf. Der Rohrkörper 62 ist drehfest mit dem ersten Wirbelteil 41 verbunden und mündet in einen Zuführkanal 46 im ersten Wirbelteil 41. Am freien Ende des Verbindungsdorns 60, welches in dem durchmessererweiterten Verbindungsende 53 der Außenhülse 52 mündet, ist ein gegenüber dem Rohrkörper 62 durchmesservergrößerter Verbindungsabschnitt 64 ausgebildet, wie anschaulich in Fig. 2 dargestellt ist.

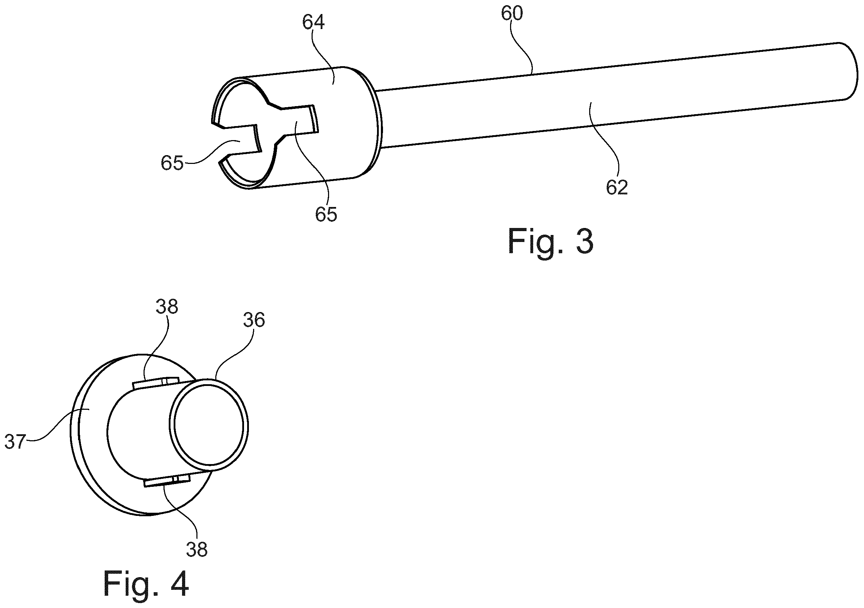

Passend zu dem Verbindungsabschnitt 64 an dem Verbindungsdorn 60 ist an der Drehdurchführung 30 an der Kellystange 20 ein ebenfalls mittig angeordneter Gegenverbindungsabschnitt 36 vorgesehen, der in Fig. 3 näher dargestellt ist. Der Gegenverbindungsabschnitt 36 ist drehfest mit einem Stator der Drehdurchführung 30 verbunden. Der Stator ist drehbar gegenüber einem Rotor 32 der Drehdurchführung 30, wobei der Rotor 32 drehfest und axial fest über eine Tragplatte 29 mit der Innenkellystange 24 verbunden ist.

Beim axialen Zusammenstecken von Kellystange 20 und Seilwirbel 40 wird der Gegenverbindungsabschnitt 36 axial in den hülsenförmigen Verbindungsabschnitt 64 des Verbindungsdorns 60 geschoben. Dabei wird eine Leitungsverbindung zwischen dem Verbindungsdorn 60 und der Drehdurchführung 30 hergestellt. Auf diese Weise kann über einen Anschluss 66 am hinteren Ende des Zuführkanals 46 eine Leitungsverbindung über die Drehdurchführung 30 zu einem Leitungskanal 25 im Inneren der Kellystange 20 hergestellt werden. In Fig. 1 ist ein Teil der Leitung innerhalb der Innenkellystange 24 nicht dargestellt. Hierdurch kann beispielsweise Fluid, insbesondere Hydraulikfluid, und/oder durch Vorsehen von entsprechenden Strom- oder Datenleitungen auch elektrischer Strom oder Daten von außen auf die im Betrieb drehende Kellystange 20 mit einem am unteren Ende angebrachten Bohrwerkzeug übertragen werden.

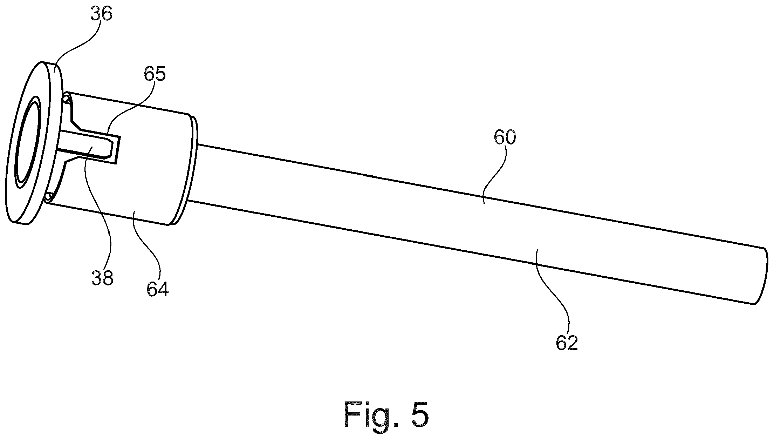

Das Zusammenstecken des Verbindungsabschnittes 64 an den Verbindungsdorn 60 mit dem Gegenverbindungsabschnitt 36 an der Drehdurchführung 30 ist nochmals näher in den Figuren 3 bis 5 dargestellt. Dabei ist an dem Rohrkörper 62 des Verbindungsdorns 60 am freien Ende ein durchmessergrößerer hülsenförmiger Verbindungsabschnitt 64 ausgebildet. Zum Bilden einer drehfesten Verbindung sind an der freien Stirnseite des Verbindungsabschnitts 64 zwei nutartige Ausnehmungen 65 in axialer Richtung eingebracht. Passend hierzu sind an einer Außenseite des hülsenförmigen Gegenverbindungsabschnitts 36 zwei zungenförmige Stege 38 ausgebildet, welche in die hierzu korrespondierenden Ausnehmungen 65 axial eingeschoben werden können, wobei eine drehfeste Formschlussverbindung gebildet ist.

Zur Befestigung des hülsenförmigen Gegenverbindungsabschnitts 36 an der Drehdurchführung 30 ist ein Verbindungsflansch 37 vorgesehen.

## Patentansprüche

1. Seilwirbel zum Verbinden eines Seils oder einer Halterung mit einer relativ zum Seil beziehungsweise der Halterung drehbaren Komponente, insbesondere einer Kellystange (30), mit
- einem stehenden ersten Wirbelteil (41), welches an dem Seil beziehungsweise der Halterung befestigbar ist, und
- einem drehbaren zweiten Wirbelteil (50), welches an dem stehenden ersten Wirbelteil (41) drehbar und axial fest gelagert sowie mit der Komponente verbindbar ist,
**dadurch gekennzeichnet,**
- **dass** das drehbare zweite Wirbelteil (50) hülsenförmig mit einem axialen Durchgang (54) ausgebildet ist und
- **dass** an dem stehenden ersten Wirbelteil (41) oder der drehbaren Komponente ein Verbindungsdorn (60) ausgebildet ist, welcher sich zumindest teilweise axial entlang des Durchgangs (54) des drehbaren zweiten Wirbelteils (50) erstreckt.

2. Seilwirbel nach Anspruch 1,
**dadurch gekennzeichnet,**
**dass** der Verbindungsdorn (60) rohrförmig ausgebildet ist und entlang seines Rohrinnenraums (63) eine Fluidleitung, eine Datenleitung, eine elektrische Stromleitung und/oder eine Hydraulikleitung verläuft.

3. Seilwirbel nach Anspruch 1 oder 2,
**dadurch gekennzeichnet,**
**dass** an dem freien Ende des Verbindungsdorns (60) ein Verbindungsabschnitt (64) zum Bilden einer form- und/oder kraftschlüssigen Verbindung mit einem Gegen-Verbindungsabschnitt (36) ausgebildet ist.

4. Seilwirbel nach Anspruch 3,
**dadurch gekennzeichnet,**
**dass** der Verbindungsabschnitt (64) mit einem Stator einer Drehdurchführung (30) verbindbar ist.

5. Seilwirbel nach einem der Ansprüche 1 bis 4,
**dadurch gekennzeichnet,**
**dass** der Verbindungsdorn (60) an seinem vom Durchgang (54) abgewandten Ende einen Anschluss (66) für eine Zuführleitung aufweist.

6. Kellystangenanordnung mit
- einem Seilwirbel (40) und
- einer Kellystange (20), welche an ihrem oberen Ende mit dem Seilwirbel (40) zum Anhängen an ein Tragseil und an ihrem unteren Ende mit einer Verbindungseinrichtung für ein Werkzeug, insbesondere einem Bohrwerkzeug, versehen ist,
**dadurch gekennzeichnet,**
**dass** der Seilwirbel (40) nach einem der Ansprüche 1 bis 5 ausgebildet ist.

7. Kellystangenanordnung nach Anspruch 6,
**dadurch gekennzeichnet,**
**dass** die Kellystange (20) drehfest mit dem drehbaren zweiten Wirbelteil (50) verbunden ist.

8. Kellystangenanordnung nach Anspruch 6 oder 7,
**dadurch gekennzeichnet,**
**dass** die Kellystange (20) an ihrem oberen Ende eine Drehdurchführung (30) aufweist, welche einen Stator und einen Rotor (32) umfasst, welcher drehfest und axial fest mit der Kellystange (20) verbunden ist, und
**dass** der Stator der Drehdurchführung (30) drehfest und lösbar mit dem Verbindungsdorn (60) des Seilwirbels (40) verbunden ist.

9. Kellystangenanordnung nach Anspruch 8,
**dadurch gekennzeichnet,**
**dass** zum Bilden einer Leitungsverbindung an dem Stator ein Gegen-Verbindungsabschnitt (36) angeordnet ist, welcher passend zu dem Verbindungsabschnitt (64) an dem Verbindungsdorn (60) ausgebildet ist.

10. Kellystangenanordnung nach Anspruch 9,
**dadurch gekennzeichnet,**
**dass** die Leitungsverbindung als eine lösbare form- und/oder kraftschlüssige Verbindung zum Leiten eines Fluides, von Daten und/oder von elektrischem Strom ausgebildet ist.

11. Bohrgerät zum Bohren im Boden, mit einer Trägereinheit und einem Bohrantrieb zum drehenden Antreiben einer Kellystange (20) mit einem Bohrwerkzeug,
**dadurch gekennzeichnet,**
**dass** eine Kellystangenanordnung (10) nach einem der Ansprüche 6 bis 10 vorgesehen ist.

## Claims

1. Rope swivel for connecting a rope or a holder to a component rotatable relative to the rope or the holder, in particular a kelly bar (30), comprising
- a stationary first swivel part (41) which can be fastened to the rope or the holder, and
- a rotatable second swivel part (50), which is rotatably and axially fixedly mounted to the stationary first swivel part (41) and is connectable to the component,
**characterised in that**
- the rotatable second swivel part (50) is designed in the form of a sleeve with an axial passage (54), and
- a connecting mandrel (60) is formed on the stationary first swivel part (41) or the rotatable component, which mandrel extends at least partially axially along the passage (54) of the rotatable second swivel part (50).

2. Rope swivel according to claim 1,
**characterised in that**
the connecting mandrel (60) is formed to be tubular and a fluid line, a data line, an electric power line and/or a hydraulic line runs along its tubular interior (63).

3. rope swivel according to claim 1 or 2,
**characterised in that**
at the free end of the connecting mandrel (60), a connecting portion (64) for forming a form-fitting and/or force-fitting connection with a counter connecting portion (36) is formed.

4. Rope swivel according to claim 3,
**characterised in that**
the connecting portion (64) is connectable to a stator of a rotary feed-through (30).

5. Rope swivel according to any one of claims 1 to 4,
**characterised in that**
the connecting mandrel (60) comprises a connector (66) for a supply line at its end facing away from the passage (54).

6. Kelly bar assembly, comprising
- a rope swivel (40), and
- a kelly bar (20) which is provided, at its upper end, with the rope swivel (40) for attachment to a suspension rope and, at its lower end, with a connecting device for a tool, in particular a drilling tool,
**characterised in that**
the rope swivel (40) is designed according to any one of claims 1 to 5.

7. Kelly bar assembly according to claim 6,
**characterised in that**
the kelly bar (20) is connected to the rotatable second swivel part (50) in a rotationally fixed manner.

8. Kelly bar assembly according to claim 6 or 7,
**characterised in that**
the kelly bar (20) comprises, at its upper end, a rotary feed-through (30) comprising a stator and a rotor (32), which rotor is connected to the kelly bar (20) in a rotationally and axially fixed manner, and
**in that** the stator of the rotary feed-through (30) is connected to the connecting mandrel (60) of the rope swivel (40) in a rotationally fixed and releasable manner.

9. Kelly bar assembly according to claim 8,
**characterised in that**
for forming a line connection, a counter connecting portion (36) is arranged on the stator, which portion is formed to match the connecting portion (64) on the connecting mandrel (60).

10. Kelly bar assembly according to claim 9,
**characterised in that**
the line connection is formed as a releasable form-fitting and/or force-fitting connection for conducting a fluid, data and/or electric current.

11. Drilling apparatus for drilling in the ground, comprising a carrier unit and a drill drive for rotatably driving a kelly bar (20) with a drilling tool,
**characterised in that**
a kelly bar assembly (10) according to any one of claims 6 to 10 is provided.

## Revendications

1. Émerillon pour le raccordement d'un câble ou d'un support avec un composant rotatif par rapport au câble ou au support, plus particulièrement une tige Kelly (30), avec
- une première partie d'émerillon stationnaire (41), qui peut être fixée au câble ou au support et
- une deuxième partie d'émerillon rotative (50) qui peut être logée de manière rotative et fixe axialement au niveau de la première partie d'émerillon stationnaire (41) et qui peut être raccordée avec le composant,
**caractérisé en ce que**
- la deuxième partie d'émerillon rotative (50) présente la forme d'un manchon avec un passage axial (54) et
- sur la première partie d'émerillon stationnaire (41) ou le composant rotatif, est prévu un mandrin de raccordement (60) qui s'étend de manière au moins partiellement axiale le long du passage (54) de la deuxième partie d'émerillon rotative (50).

2. Émerillon selon la revendication 1,
**caractérisé en ce que**
le mandrin de raccordement (60) présente une forme tubulaire et, le long de son espace interne tubulaire (63), passe une conduite de fluide, une ligne de données, un câble électrique et/ou une conduite hydraulique.

3. Émerillon selon la revendication 1 ou 2,
**caractérisé en ce que**
à l'extrémité libre du mandrin de raccordement (60) est prévue une partie de raccordement (64) pour l'établissement d'une liaison par complémentarité de forme et/ou par force avec une contre-partie de raccordement (36).

4. Émerillon selon la revendication 3,
**caractérisé en ce que**
la partie de raccordement (64) peut être reliée avec un stator d'un passage rotatif (30).

5. Émerillon selon l'une des revendications 1 à 4,
**caractérisé en ce que**
le mandrin de raccordement (60) comprend, à son extrémité opposée au passage (54), un raccord (66) pour une conduite d'alimentation.

6. Dispositif à tige Kelly avec
- un émerillon (40) et
- une tige Kelly (20) qui est munie, à son extrémité supérieure, de l'émerillon (40) pour l'accrochage à un câble porteur et, à son extrémité inférieure, d'un dispositif de raccordement pour un outil, plus particulièrement un outil de forage,
**caractérisé en ce que**
l'émerillon (40) est conçu selon l'une des revendications 1 à 5.

7. Dispositif à tige Kelly selon la revendication 6,
**caractérisé en ce que**
la tige Kelly (20) est raccordée de manière solidaire en rotation avec la deuxième partie d'émerillon rotative (50).

8. Dispositif à tige Kelly selon la revendication 6 ou 7,
**caractérisé en ce que**
la tige Kelly (20) comprend, à son extrémité supérieure, un passage rotatif (30) qui comprend un stator et un rotor (32), qui est raccordé de manière solidaire en rotation et de manière fixe axialement avec la tige Kelly (20) et
le stator du passage rotatif (30) est raccordé, de manière solidaire en rotation et de manière amovible, avec le mandrin de raccordement (60) de l'émerillon (40).

9. Dispositif à tige Kelly selon la revendication 8,
**caractérisé en ce que**
pour la formation d'un raccordement de conduite au niveau du stator, une contre-partie de raccordement (36) est prévue, qui est conçue de manière adaptée à la partie de raccordement (64) sur le mandrin de raccordement (60).

10. Dispositif à tige Kelly selon la revendication 9,
**caractérisé en ce que**
le raccordement de conduite est conçu comme une liaison par complémentarité de forme et/ou par force amovible pour conduire un fluide, des données et/ou un courant électrique.

11. Appareil de forage pour le forage du sol, avec une unité de support et un dispositif d'entraînement de forage pour l'entraînement rotatif d'une tige Kelly (20) avec un outil de forage,
**caractérisé en ce que**
un dispositif à tige Kelly (10) selon l'une des revendications 6 à 10 est prévu.
